# FASCICULE DE BREVET EUROPEEN

(11) **EP 0 328 442 B1**
(45) Date de publication et mention de la délivrance du brevet: **08.06.1994**
(21) Numéro de dépôt: 89400324.3
(22) Date de dépôt: 06.02.1989
(51) Int. Cl.: C03B 23/03

(54) **Procédé et dispositif pour l'obtention d'une feuille de verre pliée**
Verfahren und Vorrichtung zum Herstellen einer gebogenen Glasscheibe
Method and apparatus for making a bent sheet of glass

(30) Priorité: 06.02.1988 DE 3803575
(43) Date de publication de la demande: 16.08.1989
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Havenith, Hubert, D-5102 Würselen (DE); Radermacher, Herbert, B-4730 Raeren (BE); Nowoczyn, Hans-Werner, D-5100 Aachen (DE); D'Iribarne, Benoit, D-5100 Aachen (DE); Kuster, Hans-Werner, D-5100 Aachen (DE); Vanaschen, Luc, B-4700 Eupen (BE)
(74) Mandataire: Menes, Catherine

(56) Documents cités:
- FR-A- 2 359 795
- GB-A- 2 011 377
- US-A- 3 224 856
- US-A- 4 260 408
- US-A- 4 496 386
- US-A- 4 661 141

## Description

L'invention concerne un procédé d'obtention d'une feuille de verre bombée, notamment d'une feuille de verre avec des zones pliées selon un petit rayon de courbure, au moyen d'une presse de bombage à formes mâle et femelle, la forme femelle se composant d'au moins deux éléments en forme reliés par des articulations, au moins un des éléments articulés de la forme femelle étant replié contre la forme mâle après la saisie par la presse de bombage d'une partie de la feuille de verre échauffée à la température de bombage.

Différentes mises en oeuvre de procédés de bombage du type précité sont connues que ce soit dans des variantes de procédés de bombage en position verticale ou en position horizontale. Pour un bombage vertical, les feuilles de verre sont généralement transportées dans la presse de bombage, suspendues à des pinces. Pour un bombage horizontal, les feuilles de verre sont échauffées usuellement dans un four tunnel à rouleaux et conduites en position horizontale dans la presse de bombage.

La production de feuilles de verre trempées thermiquement présentant des courbures plus ou moins aigües - notamment de feuilles de verre repliées près des bords, destinées par exemple à des lunettes arrières de véhicules automobiles - est un processus critique et encore plus lorsque les feuilles de verre sont échauffées à la température de bombage en position horizontale dans un four à rouleaux. Dans ces cas notamment, il arrive que les feuilles de verre bombées se brisent lors du brusque refroidissement faisant suite au bombage et que les feuilles de verre subissent pendant la trempe thermique.

Le risque de casse élevé a pour origine le danger - accru en cas de transport horizontal du verre - d'une déformation du verre sous l'action de son propre poids. Pour contrer celui-ci, les feuilles de verre sont échauffées à une température très proche de la limite inférieure du domaine de température permettant un bombage puis une trempe du verre. Mais plus la température est abaissée pour l'amélioration de la qualité du bombage, plus on augmente le danger d'un bris des feuilles de verre présentant des lignes de pliures plus ou moins aigues, soit durant le processus de bombage même, soit pendant le processus de trempe qui lui fait suite.

Il est connu, par ailleurs, du brevet US-4,661,141 un dispositif de bombage comportant une presse pour feuilles de verre dont la partie femelle annulaire est munie d'éléments articulés autour d'une partie centrale. Le pivotement de ces éléments est assuré par un dispositif de commande et est contrôlé, en termes de vitesse de "pliage" ou de force exercée, uniquement à partir du moment où des organes stoppeurs bloquent le mouvement ascendant de pressage du moule femelle vers le moule mâle.

L'invention a pour but de développer le procédé précité d'obtention de feuilles de verre notamment celles comportant des zones pliées, de manière telle que tout en améliorant la conformité au gabarit, on élimine en grande partie le risque de bris des feuilles de verre durant les processus de bombage et de trempe.

Ce problème est résolu selon l'invention par le fait que pendant le processus de bombage, la vitesse angulaire du mouvement des éléments articulés est régulée en fonction de la température du verre et du degré de déformation.

Ainsi, conformément à la revendication 1, l'invention consiste en un procédé de bombage d'une feuille de verre portée à sa température de bombage sur un convoyeur la transportant au travers d'un four d'échauffement, notamment d'une feuille de verre avec (des) zone(s) pliée(s) selon un petit rayon de courbure, au moyen d'une presse de bombage à formes mâle et femelle, la forme femelle comportant au moins un élément en forme par rapport auquel pivote au moins un élément articulé se repliant contre la forme mâle après la saisie par la presse de bombage d'une partie de la feuille de verre. L'invention se caractérise en ce que la vitesse angulaire du mouvement de (des) élément(s) articulé(s) par rapport à l'élément en forme est régulée pendant le processus de bombage en fonction de la température de la feuille de verre et de son degré de déformation, ladite vitesse angulaire du mouvement du(des) élément(s) articulé(s) étant modifiée pendant le processus de bombage de façon à passer d'une valeur élevée au début du processus de bombage à une valeur plus basse à la fin de ce processus afin d'adapter la vitesse de bombage à l'état de viscosité du verre pour chaque feuille de verre.

On sait en effet que la vitesse de déformation a une importance primordiale sur la qualité du bombage de feuilles de verre. Il est connu que la déformation plastique de la feuille de verre s'accomplit par un processus de transposition dans la structure du verre qui nécessite un temps plus ou moins long selon la viscosité du verre. Lorsque la déformation est plus rapide que la transposition dans la structure du verre, les tensions internes ne se réajustent pas suffisamment vite et peuvent dépasser localement la résistance du verre ce qui conduit aux phénomènes observés. Selon l'invention, ces relations sont exploitées de façon à ce que la vitesse de bombage soit adaptée chaque fois à l'état de viscosité. La vitesse de bombage est optimisée de façon à être choisie aussi élevée que possible - pour des temps de bombage aussi courts que possible et éviter une chute importante de la température du verre dans la presse de bombage - mais toutefois suffisamment basse pour permettre les réarrangements et éviter le début de formation de tensions internes dangereuses dans le verre.

Au contraire de la procédure usuelle de travail, on régule la vitesse angulaire de déplacement des éléments articulés de la presse de bombage en tenant compte à la fois de la forme géométrique souhaitée et de la température de la feuille de verre à l'intérieur de la presse de bombage. Pour des conditions de production particulièrement constantes notamment du point de vue de la température des volumes et pour une forme donnée de vitrages, la vitesse angulaire optimale de déplacement peut être déterminée une fois pour toute pendant la période de fabrication d'un vitrage de forme donnée.

En pratique, on sait qu'on ne peut éviter des petites variations de températures - mais qui ont dans ce domaine de température critique une très grande influence sur le comportement viscoélastique du verre. Aussi, selon un développement de l'invention, on prévoit de mesurer la température de chaque feuille de verre à son entrée dans la presse de bombage et de régler à chaque fois la vitesse angulaire de déplacement des éléments articulés de la presse en fonction de cette température mesurée.

Selon un développement avantageux de l'invention, pendant le processus de bombage on modifie la vitesse angulaire de mouvement des éléments articulés de façon à passer d'une valeur élevée au début du bombage à une valeur basse à la fin. Cette réduction de la vitesse peut également se faire par valeurs successives. La réduction de la vitesse de bombage peut également se faire de façon continue selon une fonction qui tient compte du degré de déformation et de l'abaissement de la température de la feuille de verre pendant son bombage en raison du contact avec les formes de bombage.

La modification de la vitesse angulaire des éléments articulés voulue selon l'invention peut être également atteinte selon une variante de l'invention en déterminant au début du processus de bombage la force à exercer pour l'obtention du mouvement, en tenant compte pour cette détermination de la température de la feuille de verre en ce début de processus et de la forme géométrique souhaitée et en maintenant cette force constante pendant toute la durée du mouvement. Comme à mesure que progresse le bombage, la feuille de verre oppose une résistance accrue suite à sa baisse de température et à la déformation grossissante, le maintien constant de la force conduit automatiquement et de façon souhaitée à la diminution de la vitesse angulaire des éléments articulés.

Enfin, on peut mettre également en oeuvre l'invention si on modifie la force exercée pour le déplacement des éléments articulés selon un programme donné tenant compte de la position angulaire, ceci bien sûr toujours pour atteindre le ralentissement du déplacement voulu.

Dans un développement de l'invention, on tient compte du temps réel nécessaire au bombage d'une feuille de verre - qui selon l'invention peut différer en plus ou moins du temps de bombage de la feuille de verre immédiatement précédente - pour calculer la fréquence optimale du chargement des feuilles suivantes à l'entrée du convoyeur du four tunnel. De cette manière, on peut réguler de façon optimale la cadence de la ligne de production et utiliser au mieux sa capacité de production.

Le procédé selon l'invention s'applique dans son principe aussi bien à un bombage de feuilles de verre verticales suspendues ou à un bombage de feuilles de verre orientées horizontalement, mais c'est dans ce dernier que les avantages du procédé selon l'invention sont les plus marquants en raison des plus grandes difficultés déjà mentionnées que ce type de bombage implique.

L'invention a également pour objet, conformément à la revendication 5, le dispositif pour la mise en oeuvre de ce procédé, comportant un convoyeur transportant les feuilles de verre au travers d'un four d'échauffement, une presse de bombage à formes mâle et femelle, ladite forme femelle comportant au moins un élément en forme autour duquel pivote au moins un élément articulé se repliant contre la forme de bombage mâle après saisie par la presse d'une partie de la feuille, le mouvement du (des) élément(s) articulé(s) par rapport audit élément en forme étant régulé à l'aide d'un circuit de régulation comportant un (des) moteur(s) électrique(s) "à couple constant" commandé(s) par des amplificateurs modifiant les grandeurs de sortie en fonction d'un programme tenant compte de la chute de température de la feuille de verre au cours du processus de bombage et de sa forme géométrique.

Ce dispositif peut en outre être conçu de manière à ce que la régulation du mouvement du (des) élément(s) articulé(s) par rapport à l'élément en forme soit obtenue par la régulation du couple de flexion exploité par le(s) moteur(s), soit maintenu constant, soit variable en fonction de l'écart angulaire oméga du moteur et/ou de la température du verre.

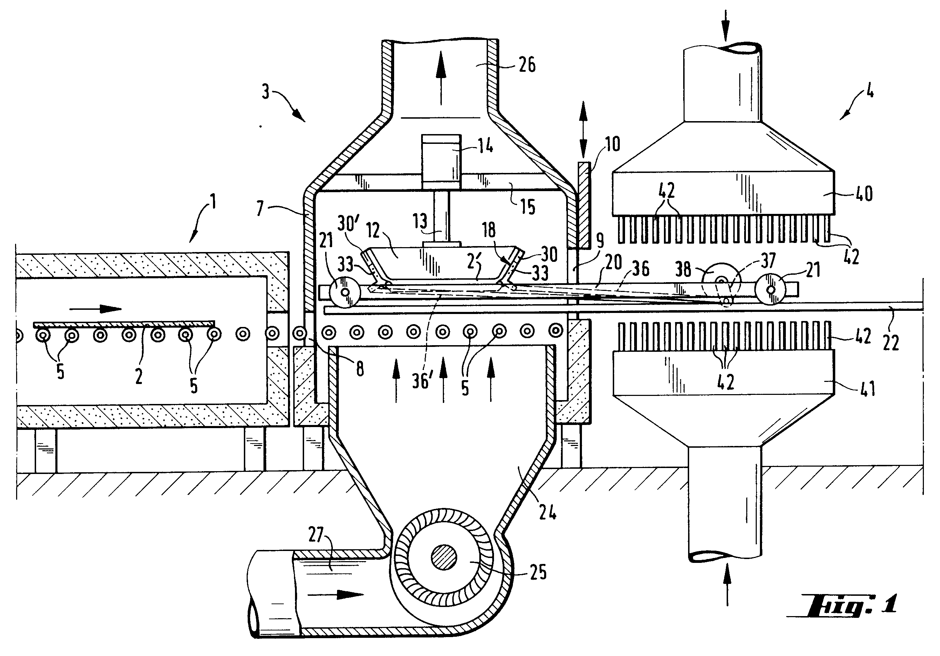

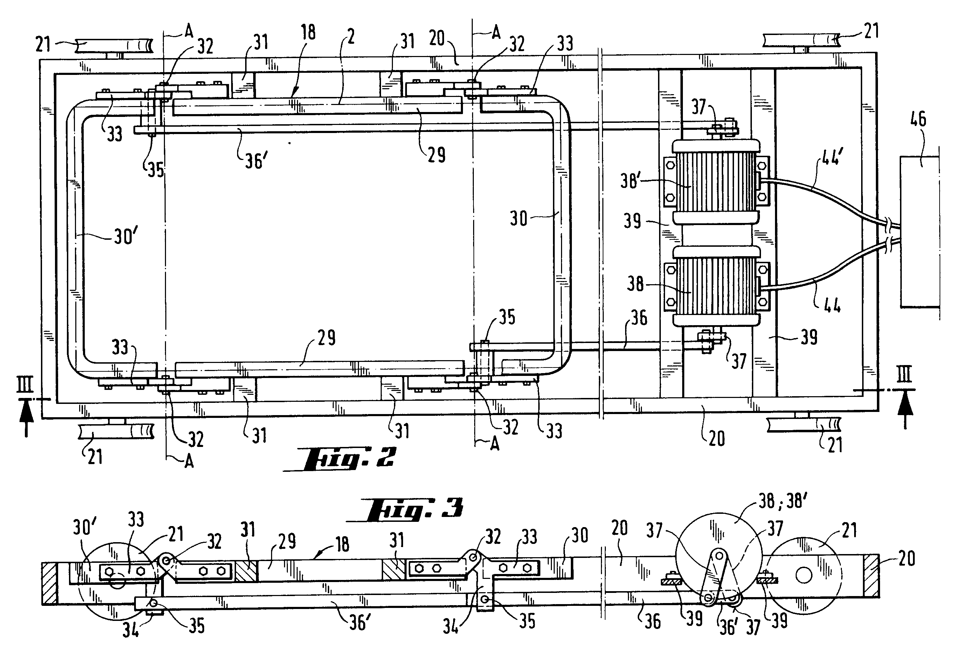

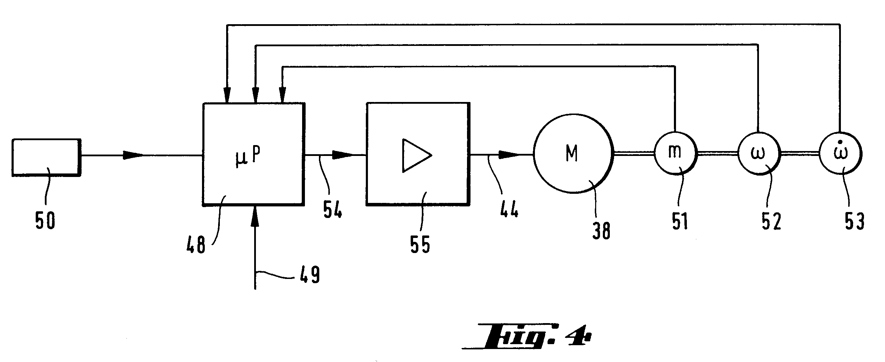

Un exemple d'application de l'invention pour un procédé de bombage horizontal est décrit ci-après en référence aux dessins annexés qui représentent :
. **figure** 1 : une coupe longitudinale d'une installation de bombage-trempe de vitrages automobiles,
. **figure 2** : une vue de dessus de la forme de bombage articulée, disposée sur un chariot mobile et utilisée figure 1,
. **figure** 3 : une coupe selon la ligne III-III du dispositif de la figure 2,
. **figure 4** : un schéma d'un circuit de régulation d'un moteur à couple constant commandant le mouvement d'un élément articulé.

L'installation représentée à la figure 1 comporte un four tunnel horizontal 1 pour l'échauffement à la température de bombage des feuilles de verre 2, une station de bombage 3 attenante au four 1 et une station de trempe 4 dans laquelle les feuilles de verre sont trempées thermiquement par brusque refroidissement.

Les feuilles de verre 2 sont transportées au travers du four 1 jusqu'à la station de bombage 3 posées sur un convoyeur formé de rouleaux moteurs 5.

La station de bombage 3 est entourée d'un bâti fermé 7 muni d'une ouverture 8 pour l'entrée des feuilles de verre chaudes et de même d'une ouverture 9 par laquelle entre et sort la forme de bombage portant la feuille de verre bombée ou le cadre de transport correspondant à cette forme. L'ouverture 9 est fermée par la porte coulissante 10.

Les outils de bombage sont disposés dans le bâti 7. Ils sont constitués par une forme de bombage pleine 12 placée au-dessus des rouleaux 5 et d'une forme 18 du type cadre annulaire coopérant avec la forme 12. La forme mâle 12 est fixée à la tige 13 du vérin 14 assurant les mouvements de montée-baisse. Le vérin 14 est fixé sur l'entretoise 15 du bâti 7. Pour sa part, la forme femelle 18 est montée sur un chariot 20 muni de roues 21 qui se déplacent sur des rails 22.

Dans la station de bombage entourée par le bâti 7 sous les rouleaux 5, débouche une conduite 24 qui est alimentée par un courant d'air chaud ascendant dirigé vers la feuille de verre. Un ventilateur 25 sert à la production de ce courant d'air chaud suivant le débit et la pression nécessaires. Au dessus des outils de bombage, le courant d'air chaud est évacué par une canalisation 26 qui le ramène au ventilateur 25 en circuit fermé via la canalisation 27.

Le processus de bombage se déroule de la façon suivante : la feuille de verre 2 échauffée à la température de bombage pénètre dans la station de bombage par l'ouverture 8. A cet instant, le chariot 20 et le cadre 18 se trouvent à l'extérieur de la station de bombage et l'ouverture 9 est fermée par la porte 10. La forme de bombage 12 est en position basse, juste au-dessus des rouleaux 5. Dès que le verre a atteint sa position finale sous la forme 12, les rouleaux 5 sont arrêtés et on met en route le ventilateur 25 - ou selon les cas, on ouvre une vanne d'arrêt ici non représentée pour laisser passer le courant d'air chaud. La feuille de verre 2 est alors soulevée au-dessus des rouleaux 5 par la pression dynamique du courant d'air chaud et pressée contre la forme de bombage 12. Alors qu'est maintenue la circulation du courant d'air chaud, la forme 12 est relevée en position haute au moyen du vérin 14. A la suite, la porte 10 est ouverte et le chariot 20 portant le cadre 18 est introduit dans la station de bombage et positionné sous la forme 12. Lorsque le cadre 18 a atteint sa position exacte sous la forme de bombage 12 au contact de laquelle est la feuille de verre 2' qui s'est déjà partiellement déformée contre la forme 12, la forme 12 et la feuille de verre 2' sont abaissées de façon à ce que la feuille 2' touche dans sa partie centrale le cadre 18.

Le cadre 18 présente des éléments latéraux 30 articulés qui sont rabattus vers le haut avec une vitesse distincte et presse les zones des bords de la feuille 2' contre les zones correspondantes de la forme de bombage 12.

Le processus de bombage terminé, la forme 12 est séparée de la feuille 2' et ramenée en position haute. La feuille 2' bombée reposant sur le cadre 18 est alors conduite à la station de trempe 4 qui comporte des caissons de soufflage supérieur 40 et inférieur 41 tous deux munis d'un grand nombre de buses de soufflage 42 par lesquelles on souffle de l'air pour la trempe de la feuille de verre bombée.

Les détails de construction de la forme femelle 18 ressortent des figures 2 et 3. La forme 18 comporte un élément central 29 formant un cadre et deux éléments latéraux 30 articulés autour des axes A-A, complétant le cadre. Au moyen de colliers 31, l'élément central 29 est fixé fermement sur le chariot 20 formant lui-aussi un cadre. L'articulation - qui permet les mouvements des éléments latéraux 30 autour des axes A-A - est constituée d'un pivot 32 monté sur l'élément central 29 et d'une éclisse 33 coopérant avec le pivot 32, fixée de son côté à l'élément latéral 30. L'éclisse 33 est par ailleurs munie d'un levier 34 orienté vers le bas sensiblement verticalement. A l'extrémité du levier 34 est situé un pivot 35 accouplé à la bielle 36. La bielle 36 est articulée au bras de manivelle 37 fixé au volant d'un moteur électrique 38. Ce moteur 38 doit pouvoir être mis en position d'arrêt et délivrer un couple moteur réglable de façon précise. Un tel moteur électrique est de ce fait désigné "moteur à couple constant", ce qui signifie que le couple correspond à tout instant à la valeur souhaitée, valeur fixée qui peut être modifiée au cours du temps. On peut utiliser pour l'invention différents types de moteurs ; ont ainsi été par exemple employés avec succès des moteurs à entrefer plat et courant continu à faible inertie, qui sont construits avec des aimants permanents et comportent un rotor non ferreux. Le couple - qui dans ce type de moteur est produit en position d'arrêt - est directement proportionnel au courant. Les moteurs électriques 38 sont alimentés en courant continu par une installation idoine de régulation du courant. Les moteurs 38 sont disposés sur leur support propre 39 fixé au chariot 20.

De même que le moteur 38 agit sur l'élément articulé 30, un second moteur 38' disposé lui-aussi sur le support 39 agit sur l'autre élément articulé 30' au moyen de la bielle 36'.

Les moteurs 38 et 38' sont reliés par des cables 44, respectivement 44' à un circuit de régulation et de commande 46 qui fournit la grandeur correspondant à la vitesse de déplacement souhaitée pour les éléments articulés 30, 30'; cette grandeur étant par exemple une tension électrique ou une fréquence correspondante. La grandeur électrique, fournie par le circuit 46 pendant la durée du mouvement des éléments articulés, est déterminée par un programme pré-enregistré utilisant comme paramètres la forme géométrique de la feuille de verre, la température initiale du verre et sa chute de température pendant le processus de bombage.

Un modèle de circuit de régulation et de commande 46 est schématisé à la figure 4. Ce circuit 46 pour le moteur à " couple constant " 38 comprend un calculateur 48 et un système 49 d'introduction des programmes et des données. Le calculateur 48 est par ailleurs commandé par des capteurs 50, 51, 52 et 53 qui fournissent respectivement la température de la feuille de verre avant et pendant le processus de bombage, le couple exercé par le moteur, l'écart angulaire Omega du moteur - respectivement de l'élément articulé de la forme de bombage - et la vitesse angulaire Omega barre du moteur - respectivement de l'élément articulé. A partir de ces données ou d'une partie d'entre elles, le calculateur 48 calcule conformément au programme les différentes paramètres nécessaires au procédé. Par la ligne 54 on commande le servo-amplificateur 55 qui commande lui-même par la ligne 44 le moteur 38.

Avec un tel circuit de commande et de régulation, et suivant la forme de la feuille de verre et le procédé choisis on peut utiliser les modes de fonctionnement suivants :
- régulation du couple exploité par le moteur 38 :
   a) bombage de la feuille de verre avec un couple de flexion réglé, constant,
   b) bombage de la feuille de verre avec un couple de flexion variable, fonction de l'écart angulaire,
   c) bombage de la feuille de verre avec un couple de flexion variable, fonction de la température du verre,
   d) bombage de la feuille de verre avec un couple de flexion variable, fonction de l'écart angulaire et de la température du verre.
- régulation de la vitesse de bombage :
   a) bombage à vitesse réglée constante, dépendant de la forme et de la température de sortie de la feuille de verre,
   b) bombage à vitesse variable, fonction de l'écart angulaire,
   c) bombage à vitesse variable, fonction de la forme de la feuille de verre et de la chute de température du verre,
   d) bombage à vitesse variable, fonction de l'écart angulaire et de la chute de température du verre pendant le processus de bombage.
- commande de la cadence du four :
- En cas de bombage selon les formes les plus complexes, la cadence du four est déterminée par le temps de bombage. Aussi et à l'aide du calculateur 48, on peut calculer ce temps de bombage en fonction de la forme de la feuille de verre et de sa température et au délà commander la cadence du four.

## Revendications

1. Procédé de bombage d'une feuille de verre portée à sa température de bombage sur un convoyeur (5) la transportant au travers d'un four d'échauffement (1), notamment d'une feuille de verre (2) avec une(des) zone(s) pliée(s) selon un petit rayon de courbure, au moyen d'une presse de bombage à formes mâle (12) et femelle (18), la forme femelle (18) comportant au moins un élément en forme (29) par rapport auquel pivote au moins un élément articulé (30) se repliant contre la forme mâle (12) après la saisie par la presse de bombage d'une partie de la feuille de verre (2), **caractérisé en ce que** la vitesse angulaire du mouvement de(des) élément(s) articulé(s) par rapport à l'élément en forme (29) est régulée pendant le processus de bombage en fonction de la température de la feuille de verre (2) et de son degré de déformation, ladite vitesse angulaire du mouvement du(des) élément(s) articulé(s) (30) étant modifiée pendant le processus de bombage de façon à passer d'une valeur élevée au début du processus de bombage à une valeur plus basse à la fin de ce processus afin d'adapter la vitesse de bombage à l'état de viscosité du verre pour chaque feuille de verre (2).

2. Procédé selon la revendication 1**, caractérisé en ce que** la réduction de la vitesse angulaire du mouvement du(des) élément(s) articulé(s) (30) est obtenue de façon continue ou par valeurs successives pendant le processus de bombage.

3. Procédé selon la revendication 1 ou 2, **caractérisé en ce que** la force exercée pour l'obtention du mouvement du(des) élément(s) articulé(s) (30) est déterminée au début du processus de bombage en fonction de la température de la feuille de verre (2') au début dudit processus de bombage et de la forme géométrique souhaitée, ladite force étant maintenue constante pendant toute la durée du mouvement.

4. Procédé selon l'une des ou plusieurs des revendications 1 à 3, **caractérisé en ce qu'**en cas de temps de bombage différents de feuilles de verre (2') successives, on modifie la fréquence optimale de chargement des feuilles (2) suivantes à l'entrée du convoyeur (5) transportant les feuilles au travers du four d'échauffement (1).

5. Dispositif pour la mise en oeuvre du procédé selon l'une des revendications 1 à 4, comportant un convoyeur (5) transportant les feuilles de verre (2) au travers d'un four d'échauffement (1), une presse de bombage à formes mâle (12) et femelle (18), ladite forme femelle comportant au moins un élément en forme (29) autour duquel pivote au moins un élément articulé (30) se repliant contre la forme de bombage mâle (12) après saisie par la presse d'une partie de la feuille (2), **caractérisé en ce que** le mouvement du(des) élément(s) articulé(s) (30) par rapport audit élément en forme (29) est régulé à l'aide d'un circuit de régulation comportant un(des) moteur(s) électrique(s) (38) "à couple constant" commandé(s) par des amplificateurs (55) modifiant les grandeurs de sortie en fonction d'un programme tenant compte de la chute de température de la feuille de verre (2') au cours du processus de bombage et de sa forme géométrique.

6. Dispositif selon la revendication 5, **caractérisé en ce que** la régulation du mouvement du(des) élément(s) articulé(s) (30) par rapport à l'élément en forme (29) est obtenue par la régulation du couple de flexion exploité par le(s) moteur(s) (38), soit maintenu constant, soit variable en fonction de l'écart angulaire oméga du moteur et/ou de la température du verre.

## Claims

1. Method of bending a glass sheet raised to its bending temperature on a conveyor (5) conveying it through a heating furnace (1), notably a glass sheet (2) having one or more zones bent to a small radius of curvature, by means of a bending press having male (12) and female (18) moulds, the female mould (18) comprising at least one shaped element (29), relative to which there pivots at least one articulated element (30) folding up against the male mould (12) after a portion of the glass sheet (2) has been seized by the press, characterized in that the angular velocity of the movement of the articulated element or elements relative to the shaped element (29) is regulated during the bending process as a function of the temperature of the glass sheet (2) and of the degree of its deformation, said angular velocity of the movement of the articulated element or elements (30) being modified during the bending operation in such a way as to change from a high value at the start of the bending operation to a lower value at the end of this operation, in order to adapt the rate of bending to the viscosity state of the glass for each glass sheet (2).

2. Method according to Claim 1, characterized in that the reduction of the angular velocity of the movement of the articulated element or elements (30) is produced continuously or by successive values during the bending operation.

3. Method according to Claim 1 or 2, characterized in that the force exerted for obtaining the movement of the articulated element or elements (30) is determined at the start of the bending operation as a function of the temperature of the glass sheet (2') at the start of said bending operation and of the desired geometrical shape, said force being maintained constant throughout the duration of the movement.

4. Method according to one or more of Claims 1 to 3, characterized in that, in the case of different bending times for successive glass sheets (2'), the optimum frequency of charging of the following glass sheets (2) at the entry to the conveyor (5) conveying the sheets through the heating furnace (1) is modified.

5. Device for carrying out the method according to one of Claims 1 to 4, comprising a conveyor (5) conveying the glass sheets (2) through a heating furnace (1), a bending press having male (12) and female (18) moulds, said female mould comprising at least one shaped element (29), about which there pivots at least one articulated element (30) folding up against the male bending mould (12) after a portion of the glass sheet (2) has been seized by the press, characterized in that the movement of the articulated element or elements (30) relative to said shaped element (29) is regulated by means of a control circuit comprising one or more "constant-torque" electric motors (38), controlled by amplifiers (55) which modify the output values as a function of a programme taking into account the fall of temperature of the glass sheet (2') during the bending operation and its geometric shape.

6. Device according to Claim 5, characterized in that the regulation of the movement of the articulated element or elements (30) relative to the shaped element (29) is obtained by regulating the bending moment applied by the motor or motors (38), either kept constant or variable as a function of the angular displacement omega of the motor and/or of the temperature of the glass.

## Patentansprüche

1. Verfahren zum Biegen einer bei Biegetemperatur auf einer Transporteinrichtung (5) durch einen Ofen (1) transportierten Glasscheibe, insbesondere einer Glasscheibe (2) mit einer oder mehreren unter kleinen Kruemmungsradien gebogenen Zone(n), mittels einer eine Patritze (12) und eine Matritze (18) aufweisenden Biegepresse, wobei die Matritze wenigstens ein Formteil (29) umfasst, um welches nach dem Erfassen eines Teils der Glasscheibe (2) durch die Biegepresse wenigstens ein schwenkbares Element (30) gegen die Patritze (12) verschwenkt wird, dadurch gekennzeichnet, dass die Winkelgeschwindigkeit des(r) um das Formteil (29) schwenkbaren Elements(e) waehrend des Biegevorganges in Abhaengigkeit von der Temperatur der Glasscheibe (2) und von dem Grad der Verformung geregelt wird, wobei die Winkelgeschwindigkeit des(r) schwenkbaren Elements(e) (30) waehrend des Biegevorgangs von einem hohen Wert bei Beginn des Biegevorgangs auf einen niedrigen Wert bei Ende des Biegevorgangs verringert wird, so dass die Biegegeschwindigkeit an die Viskositaet des Glases fuer jede Glasscheibe (2) anpassbar ist.

2. Verfahren nach Anspruch 1, dadurch gekennzeichnet, dass die Verringerung der Winkelgeschwindigkeit des(r) schwenkbaren Elements(e) (30) kontinuierlich oder durch aufeinanderfolgende Werte waehrend des Biegevorganges erfolgt.

3. Verfahren nach Anspruch 1 oder 2, dadurch gekennzeichnet, dass in Abhaenigkeit von der Temperatur der Glasscheibe (2') bei Beginn des Biegevorganges und in Abhaengigkeit von der gewuenschten geometrischen Form die Kraft fuer die Erzeugung der Schwenkbewegung des(r) schwenkbaren Elemente(e) (30) bei Beginn des Biegevorgangs ermittelt und diese Kraft waehrend der gesamten Bewegungsdauer konstant gehalten wird.

4. Verfahren nach einem oder mehreren der Ansprueche 1 bis 3, dadurch gekennzeichnet, dass bei unterschiedlicher Biegezeit aufeinanderfolgender Glasscheiben (2') die Aufgabedichte der aufeinanderfolgenden Glasscheihen (2) am Beginn der die durch den Ofen transportierenden Foerdervorrichtung veraendert wird.

5. Vorrichtung zur Durchfuehrung des Verfaurens nach einem der Ansprueche 1 bis 4, mit einer Transportvorrichtung zum Transport der Glasscheiben durch (2) durch einen Ofen (1), einer Biegepresse mit einer Matritze (12) und einer Patritze (18), wobei die Matrize wenigstens ein Formelement (29) aufweist um welches nach dem Erfassen eines Teils der Scheibe (2) durch die Biegepresse wenigstens ein schwenkbares Element (30) verschwenkbar ist, dadurch gekennzeichnet, dass die Bewegung des(r) schwenkbaren Elements(e) (30) um dasFormteil (29) mit Hilfe eines Regelkreises geregelt wird, der wenigstens einen durch Verstaerker (55) ansteuerbaren elektrischen Motor (38) mit konstantem Drehmoment umfasst, wobei die Ausgangsgroessen der Verstaerker in Abhaengigkeit eines Programmes veraenderbar sind, welches den Temperaturabfall der Glasscheibe (2') waehrend des Biegevorganges und die geometrische Form der Glasscheibe beruecksichtigt.

6. Vorrichtung nach Anspruch 5, dadurch gekennzeichnet, dass die Steuerung der Bewegung des(r) schwenkbaren Elements(e) (30) um das Formteil (29) durch eine Steuerung des durch den/die Motor(en) (38) ausgewerteten Biegemoments erzielt wird, welches entweder konstant gehalten wird oder in Abhaengigkeit des Drehwinkels Omega des(r) Motors(en) und oder der Glasscheibentemperatur veraenderbar ist.
